# EUROPEAN PATENT SPECIFICATION

(11) **EP 4 020 019 B1**
(45) Date of publication and mention of the grant of the patent: **08.05.2024**
(21) Application number: 21217877.6
(22) Date of filing: 19.10.2018
(51) Int. Cl.: G01T 1/24

(54) **RADIATION DETECTOR, METHOD FOR PRODUCING A RADIATION DETECTOR AND METHOD FOR OPERATING A RADIATION DETECTOR**
STRAHLUNGSDETEKTOR, VERFAHREN ZUR HERSTELLUNG EINES STRAHLUNGSDETEKTORS UND VERFAHREN ZUM BETRIEB EINES STRAHLUNGSDETEKTORS
DÉTECTEUR DE RAYONNEMENTS, PROCÉDÉ DE FABRICATION D'UN DÉTECTEUR DE RAYONNEMENTS ET PROCÉDÉ POUR FAIRE FONCTIONNER UN DÉTECTEUR DE RAYONNEMENTS

(43) Date of publication of application: 29.06.2022
(62) Divisional of application: 18201555.2
(73) Proprietor: Avago Technologies International Sales Pte. Limited, Singapore 768923 (SG)
(72) Inventor: ISKRA, Peter, 85579 Neubiberg (DE); VINOGRADOV, Sergey, 142190 Troitsk, Moscow (RU)
(74) Representative: Dilg, Haeusler, Schindelmann Patentanwaltsgesellschaft mbH

(56) References cited:
- EP-A1- 2 779 255
- US-A1- 2008 211 012
- US-B2- 8 476 730

## Description

A radiation detector is provided. Moreover, a method for producing a radiation detector and a method for operating a radiation detector are also provided.

Documents US 8,906,728 B2 and US 8,680,639 B1 refer to radiation detectors. EP2779255 A1 discloses various examples of trenches made of flanked poly-silicon layers and filled with a dielectric material, or a poly-silicon trench filling including semiconductor layer and flanked by junction regions. US2008/211012 discloses various examples of trenches with insulation layers or a dielectric filled trench with p- and n-type liners.

An object to be achieved is to provide a radiation detector that has a high proportion of a sensitive area relative to an overall area.

This object is achieved inter alia by a radiation detector having the features of claim 1. Preferred further developments constitute the subject-matter of the remaining claims.

In particular, the radiation detector described herein comprises a plurality of first electrodes that have tips that penetrate into a semiconductor layer. There is a sensitive area around the tips. By arranging the tips appropriately, gaps between adjacent sensitive areas can be minimized or eliminated. As there is no, or no significant, minimal distance between adjacent sensitive areas, the radiation detector can be sensitive almost over its complete area when seen in top view.

According to at least one embodiment, the detector is configured to detect radiation. The radiation to be detected AD: mr can be x-ray radiation, ultraviolet radiation, visible radiation or also infrared radiation. However, preferably the detector is designed for a specific wavelength range and has a maximum sensitivity in the wavelength it is specifically configured for.

The radiation detector comprises a semiconductor body. The semiconductor body is the part of the detector that is sensitive to the radiation to be detected. The semiconductor body has at least one radiation entrance face. The radiation entrance face is, for example, a main face of the semiconductor body. It is possible that only one main face or also two main faces on opposite sides of the semiconductor body are configured as radiation entrance faces. For example, the semiconductor body is based on silicon or germanium. As an alternative, or in addition, the semiconductor body could be based on a III-V compound semiconductor material or also on a II-VI compound semiconductor material.

According to at least one embodiment, the radiation detector comprises a plurality of first electrodes. The first electrodes can be electrically independent of one another. Preferably, the first electrodes all have the same function and are configured for the same purpose and can be of the same configuration. The first electrodes can be of a semiconductor material like polysilicon, of a metal like tungsten and/or of a transparent conductive oxide like indium tin oxide.

According to at least one embodiment, the radiation detector comprises one or more than one second electrodes. The at least one second electrode is, for example, of a semiconductor material, of a metal and/or of a transparent conductive oxide. It is possible that there is one common second electrode for all first electrodes or that groups of first electrodes are assigned to one of the second electrodes in each case. Moreover, there can be a one-to-one assignment of the second electrodes to the first electrodes.

According to at least one embodiment, each one of the first electrodes comprises a tip or consists of a tip. The tip extends into the semiconductor body. The tip could be of one material or of a plurality of different materials, in particular of electrically conductive materials.

According to at least one embodiment, the penetration depth Th of the tips into the semiconductor body exceeds a maximum width Tw of the tips, that is Th > Tw. In particular, the penetration depth is at least 150% or 300% or 500% of the maximum width of the respective tips. Thus, the tips are deeper than they are wide.

According to at least one embodiment, the tips are configured to collect charge carriers generated in the semiconductor body by the radiation to be detected. In particular, the tips are configured to collect electrons of electron hole pairs generated by the radiation. Thus, the tips could be configured as anodes. As an alternative, the tips could be configured as cathodes. Moreover, it is possible that some of the tips are configured as anodes and other tips are configured as cathodes.

In at least one embodiment, the radiation detector comprises a semiconductor body having at least one radiation entrance face. Further, the radiation detector includes a plurality of first electrodes and at least one second electrode. Each one of the first electrodes comprises a tip that extends into the semiconductor body. A penetration depth of the tips into the semiconductor body exceeds a maximum width of the tips. The tips are configured to collect charge carriers generated in the semiconductor body by the radiation to be detected.

Conventional radiation detectors like avalanche photodiodes typically comprise a plurality of cells that are fashioned in a planar manner. When seen in top view, between the cells there must be non-sensitive peripheral regions because of border effects. When the cells become small, the relative proportion of the periphery regions increases and, thus, the relative proportion of the sensitive area decreases. This problem is inherent to planar detector cells of conventional avalanche photodiodes.

With the detector design described here, no planar electrodes need to be used. Contrary to that, sensitive regions assigned to the tips could be approximately of spherical shape with an electrical field focused to the tip. As a result, the border effect can be avoided or reduced so that a high fill factor of the sensitive areas can be achieved, when seen in top view. Thus, the radiation detector described here enables a high sensitivity, for example for near infrared radiation.

The tips comprises a pillar and a head. The pillar starts at the radiation entrance face of the semiconductor body. The head terminates the pillar within the semiconductor body. As an alternative not forming part of the claimed invention, the head can penetrate through the semiconductor body, however, this is not preferred.

According to at least one embodiment, the pillar constitutes the main part of the tip along a longitudinal direction of the tip. Preferably, the longitudinal direction is perpendicular to the radiation entrance face. For example, the length of the pillar contributes to an overall length of the respective tip to at least 60% or 75% or 90%. Preferably, the length of the pillar is at most 80% or 75% of the overall length of the tip.

An electrical insulating layer is located directly between the pillar and the semiconductor body. Thus, only the head is in direct electrical contact with the semiconductor body and not the pillar. Due to the electrical insulation layer, it is possible that only the head is configured to collect the charge carriers generated by the radiation to be detected. It is possible that the penetration depth of the tip into the semiconductor body exceeds a maximum width of the insulation layer associated with the respective tip.

The end of the insulation layer defines an intersection between the pillar and the respective head. Otherwise, not forming part of the claimed invention, it is possible that the intersection or border between the pillar and the head is defined by the geometry of the tip itself, for example, the tip begins to broaden where the pillar terminates and the head begins.

According to at least one embodiment, one or some or all of the tips comprises a pillar that is narrower than the associated head. That is, the maximum width can be present at the respective head. In particular, the narrowest place of the tips is at the intersection between the pillar and the head. Starting from the intersection and running towards the radiation entrance face, the pillar might become broader. According to at least one embodiment, the pillar is of cylindrical or prismatic shape. As an alternative, the pillar has the shape of a truncated cone or of a truncated pyramid. According to at least one embodiment, the head is of circular shape or of elliptic shape or of square shape or of trapezoidal shape or of triangular shape when seen in a cross-section along the respective tip. That is, the head can be a sphere or an ellipsoid or also a prism or a truncated cone or a truncated pyramid.

According to at least one embodiment, one or some or all of the tips terminates in the semiconductor body with a curvature. Preferably, a radius of curvature is at least 1% or 5% or 10% and/or at most 60% or 30% or 20% of the penetration depth Th. That is, the penetration depth is preferably significantly larger than the radius of curvature at the tips. The radius of curvature is preferably the radius of curvature at the side of the tip most distant from the main face of the semiconductor body where the respective tip has its origin.

According to at least one embodiment, one or some or all of the tips becomes monotonically narrower along the direction into the semiconductor body, that is towards the head. It is possible in this case that the tips terminate in the semiconductor body with an edge and/or with a corner. Otherwise, the tips can also terminate with a round structure like a semi-sphere or a semi-ellipsoid. Thus, the head is narrower than the respective pillar.

According to at least one embodiment, the radiation detector further comprises one or a plurality of doped areas. Preferably, there is a one-to-one assignment between the doped areas and the tips. That is, to every tip there could be exactly one doped area. Preferably, the doped areas are located between the respective tip and the respective second electrode.

According to at least one embodiment, a mean doping concentration in the doped areas exceed a peak doping concentration of adjacent regions of the semiconductor body by at least 1 or 2 or 3 orders of magnitude. Preferably, the doping polarity of the doped region is the same as the doping polarity of the adjacent material of the semiconductor body. In particular, both the semiconductor body and the doped area are n-doped.

According to at least one embodiment, a distance of the doped areas towards the tips is smaller than towards the second electrode. Hence, the doped areas can be near the respective tips. When seen in top view onto the radiation entrance face, each one of the doped areas can completely be covered by the respective tip. Otherwise, the respective doped area can laterally spread beyond the associated tip.

According to at least one embodiment, the semiconductor body is based on silicon.

According to at least one embodiment, the radiation detector is configured to detect radiation from at least a part of the near infrared wavelength range. That is, the radiation detector is in particular detective for a spectral sub-range from the range of 600 nm to 980 nm.

According to at least one embodiment, a maximum thickness of the semiconductor body between the first electrode and the second electrode is at least 0.5 um or 1 um or 2 um. As an alternative or in addition, the maximum thickness is at most 50 um or 20 um or 10 um. Thus, the semiconductor body between the first and second electrodes can be comparably thick.

However, the substrate itself can constitute the semiconductor body so that the maximum thickness is then a substrate thickness which could amount to several hundreds of microns, for example at least 100 um and/or at most 1 mm.

According to at least one embodiment, an optically functional coating is provided to the semiconductor body and/or to the electrodes and/or to insulation layers applied to the semiconductor body. In particular, the optical coating is an antireflection coating. Thus, the proportion of the radiation to be detected that reaches into the semiconductor body can be increased.

According to at least one embodiment, the tips are in part or completely of a semiconductor material. Preferably, the semiconductor material of the tips is different from the semiconductor material of the semiconductor body. For example, the tips are made in part of polysilicon.

It is possible that the tips are made of a semiconductor material as well as of a metal. If a metal is used, preferably the metal constitutes a core of the respective tip so that a shell of said tip can be solely formed of one or of a plurality of semiconductor materials like polysilicon.

According to at least one embodiment, the semiconductor body continuously extends over the first electrodes so that a thickness of the semiconductor body between adjacent tips is constant. Thus, there are no trenches or recesses in the semiconductor body between adjacent tips. Hence, the semiconductor body can be free of any structuring beside the tips that penetrate into the semiconductor body and beside electrical through-contacts to electrically connect a back side of the semiconductor body with the radiation entrance face, for example.

According to at least one embodiment, each one of the first electrodes or small groups of first electrodes are surrounded by trenches. The semiconductor body has a reduced thickness or is completely removed in the area of the trenches. By such trenches, an optical insulation between the first electrodes or the groups of first electrodes can be achieved. The term "small group" in particular means that the respective group comprises at most 50 or 20 or 10 of the first electrodes.

In comparison, the radiation detector preferably comprises at least 100 or at least 25000 of the first electrodes per square millimeter. Thus, if the first electrodes are grouped, they can be combined to subunits of any quantity.

According to at least one embodiment, the radiation detector further comprises quench resistors. Preferably, each one of the quench resistors is assigned to one of the first electrodes or to one of the small groups of first electrodes.

By means of the quench resistors, a time resolution of the radiation detector can be increased.

According to at least one embodiment, the respective quench resistor is integrated in the first electrode, in particular is integrated in the tip, preferably in the pillar. By means of this arrangement, the fill factor of the sensitive area can be increased as no space for the quench resistor is needed laterally beside the tips.

As an alternative, the quench resistor can be located on the radiation entrance face and may be of radiation-transmissive fashion so that the radiation to be detected can run through the quench resistor before being absorbed in the semiconductor body.

According to at least one embodiment, the density of the tips varies over the semiconductor body when seen in top view onto the radiation entrance face. For example, the tips are arranged in a higher density in the center of the radiation entrance face. By varying the density of the tips, an electrical field originating from the tips can be adjusted in particular in edge regions of the radiation detector, when seen in top view. As an alternative, there can be various density variations so that there is a plurality of areas in which the tips are arranged quite close to one another and/or there is a plurality of areas in which the tips are arranged with a low density.

Moreover, a method for producing a radiation detector is provided according to claim 13. The radiation detector is configured as described in the embodiments as stated above. Therefore, features for the production method are also disclosed for the radiation detector and vice versa.

In at least one embodiment, the production method comprises the following steps, preferably in the stated order:
- providing a substrate,
- growing at least one semiconductor layer onto the substrate to form the radiation-sensitive semiconductor body,
- forming holes at least into a semiconductor layer and optionally also into the substrate,
- filling the holes with at least one material to form the tips for the first electrodes, and
- electrically connecting the tips.

Preferably, the holes and, hence, the tips are limited to the semiconductor layer so that the substrate can be free of the tips. In particular in this configuration the substrate can be of a highly doped material, in particular of silicon. Hence, the substrate might be an ohmic conductor or a nearly ohmic conductor. When the substrate is highly doped, the substrate itself may serve as the second electrode. Moreover, a method to operate a radiation detector is provided according to claim 14. The radiation detector described above is operated by the method. Hence, features for the operation method are disclosed for the radiation detector and vice versa.

In at least one embodiment of the operation method, a voltage is applied between the first electrode and the second electrode. Thus, an electrical field increases towards the tips. The radiation detector is operated in an avalanche mode or in a linear mode. Preferably, the radiation detector is operated in an avalanche mode. The operation in the avalanche mode, also referred to as Geiger mode, is explained, for example, in document DE 10 2009 017 505 A1, see in particular paragraphs 43, 44, 45 and 58.

According to at least one embodiment, an electrical high-field region in which an avalanche breakdown occurs is limited to a shell around an end of the respective tip within the semiconductor body. That is, when charge carriers reach the high-field region, then an avalanche of carriers is produced. Preferably, the shell in which the avalanche breakdown can occur is comparably thin. For example, the thickness of said shell is at most 50% or 15% or 1% of the overall length (Th) of the associated tip. As an alternative or in addition, the shell in which the avalanche breakdown can occur has a thickness of at most 500 nm or 100 nm. According to at least one embodiment, a light source is assigned to the radiation detector, in particular a light source for near infrared radiation. The radiation detector detects radiation emitted by the light source and reflected by an external object. Thus, a distance between the radiation detector and the light source, on the one hand, and the object, on the other hand, can be determined by means of a time-of-flight measurement. Thus, the radiation detector preferably has a high temporal resolution, for example a temporal resolution of 5 nm or less or of 2 nm or less.

A radiation detector and an operation method for a radiation detector described herein are explained in greater detail below by way of exemplary embodiments with reference to the drawings. Elements which are the same in the individual figures are indicated with the same reference signs. The relationships between the elements are not necessarily shown to scale, however, but rather individual elements may be shown exaggeratedly large to assist in understanding.

In the figures:
- Figure 1: shows a perspective view of a modification of a radiation detector known in the art;
- Figure 2: shows a sectional view of an exemplary embodiment of a radiation detector;
- Figure 3: shows an electron microscopic picture of a tip of an exemplary embodiment of a radiation detector;
- Figure 43: shows a schematic representation of an electric field around a tip of an exemplary embodiment of a radiation detector;

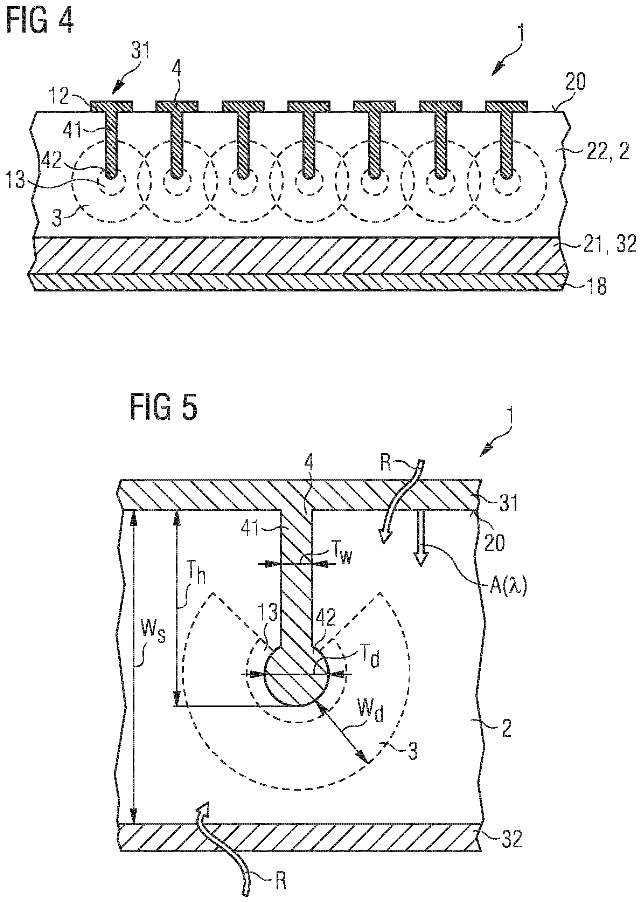

- Figures 4 and 5: show sectional views of exemplary embodiments of radiation detectors;

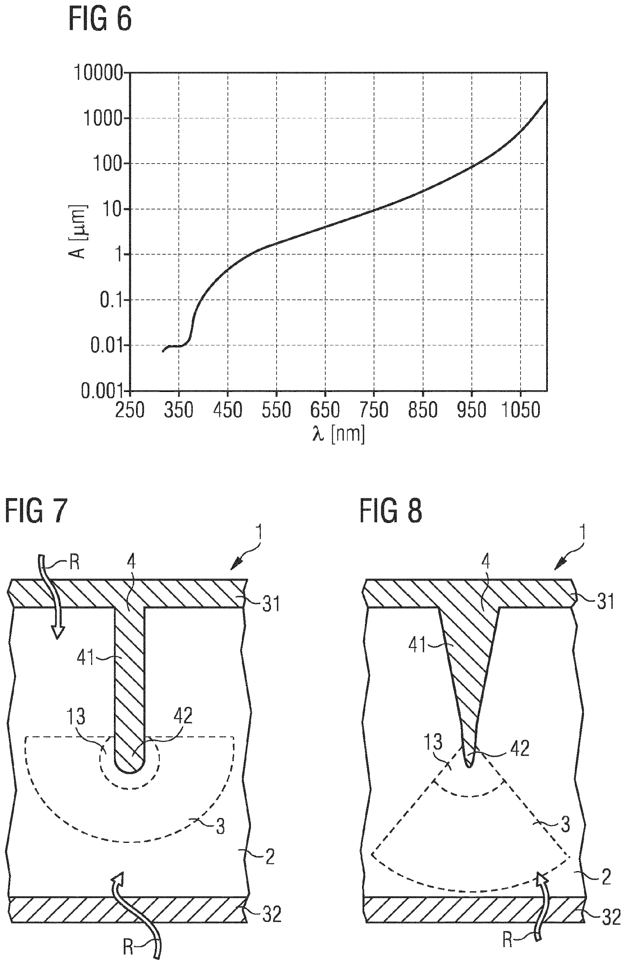

- Figure 6: shows the dependency of an absorption coefficient for radiation depending on the wavelength in silicon,
- Figures 7 and 8: show sectional views of exemplary embodiments of radiation detections;

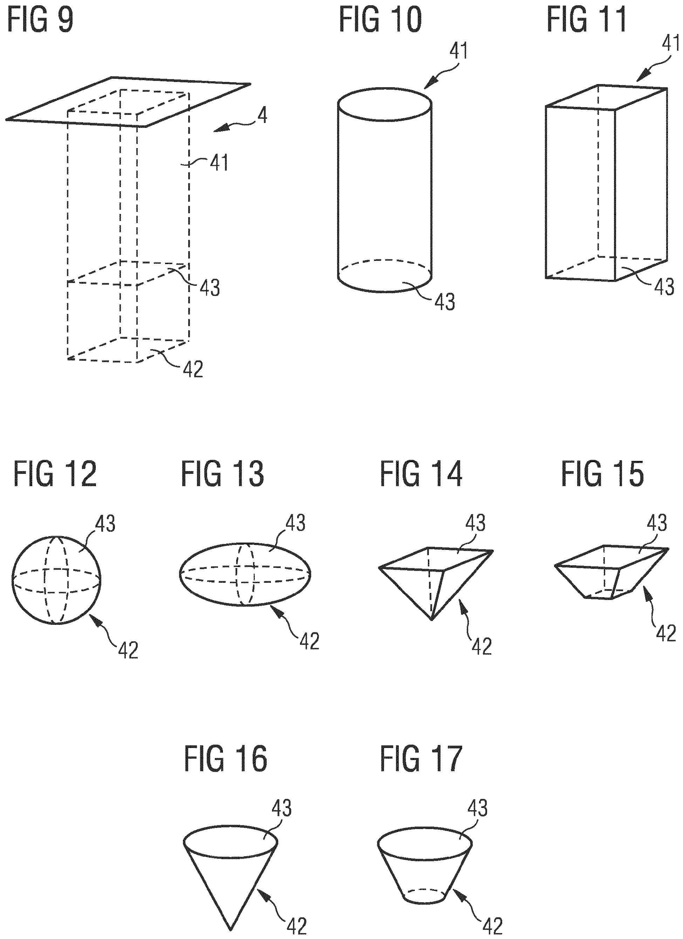

- Figures 9 to 17: show perspective views of tips and parts of tips of exemplary embodiments of radiation detectors;

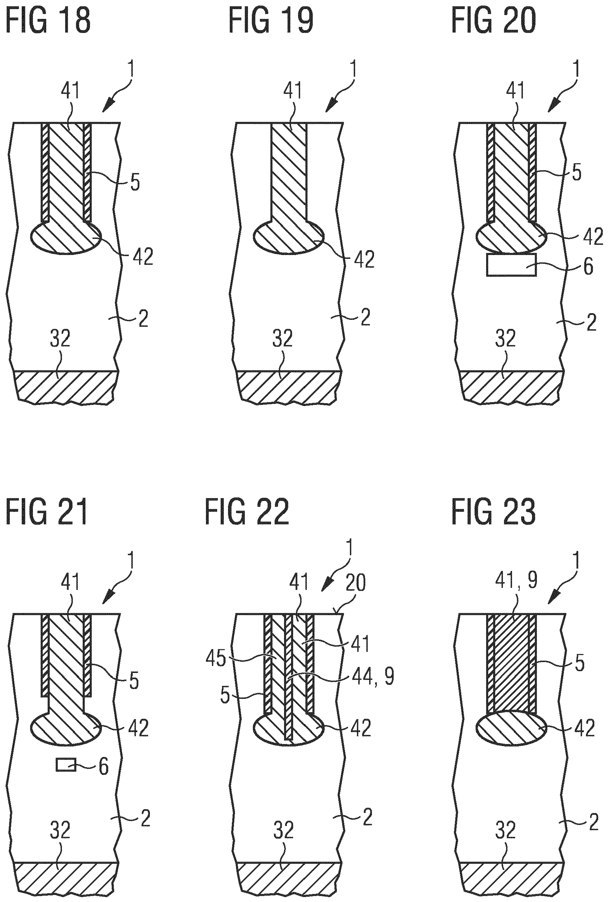

- Figures 18 and 20: to 29 show sectional views of exemplary embodiments of radiation detectors;

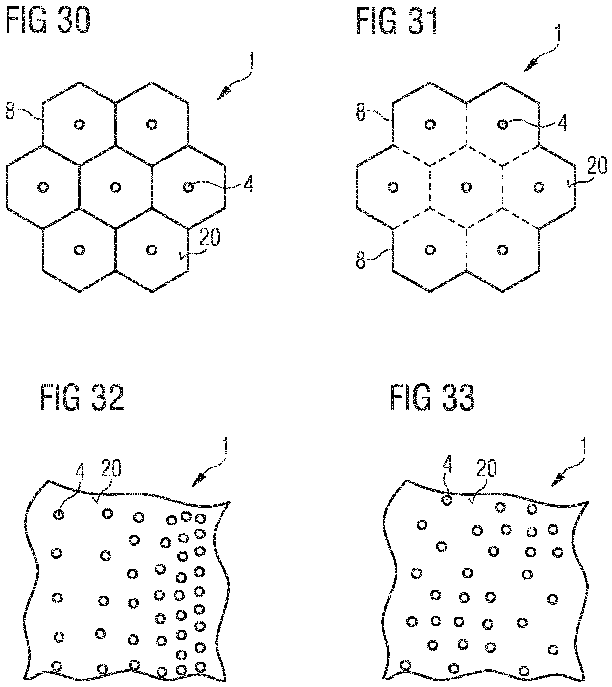

- Figures 30 to 33: show top views of exemplary embodiments of radiation detectors;

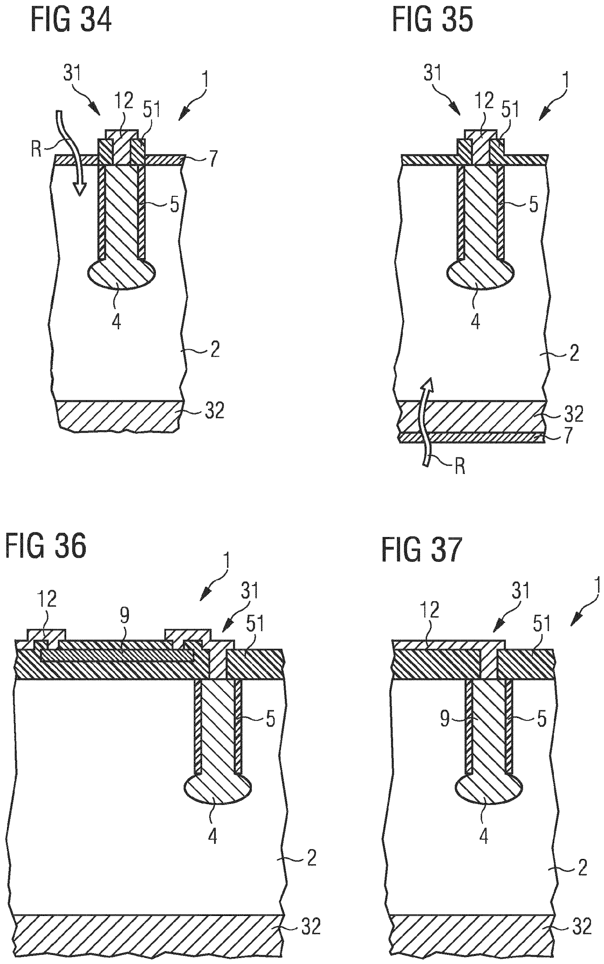

- Figures 34 to 41: show sectional views of exemplary embodiments of radiation detectors; and

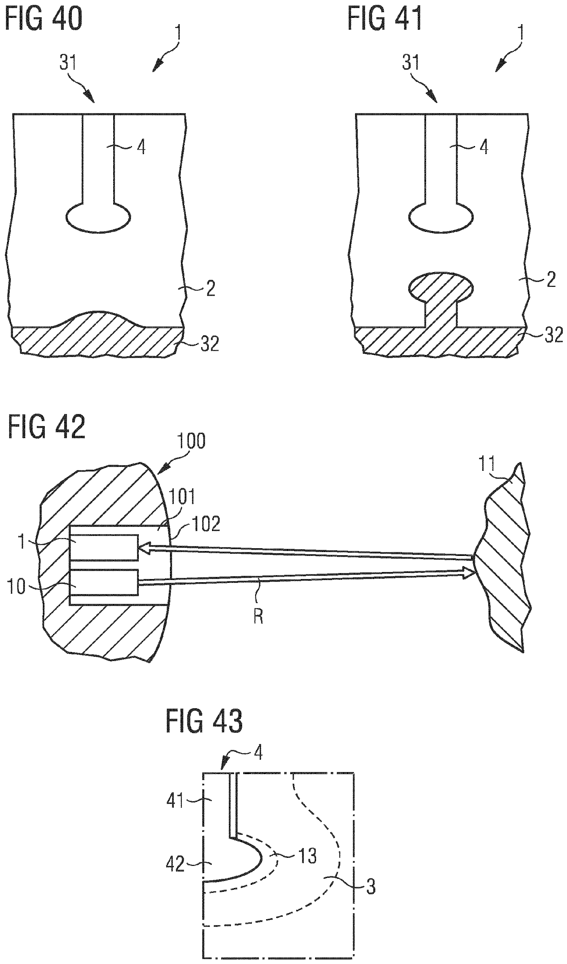

- Figure 42: shows a sectional view of a principle of operation of an exemplary embodiment of a radiation detector.

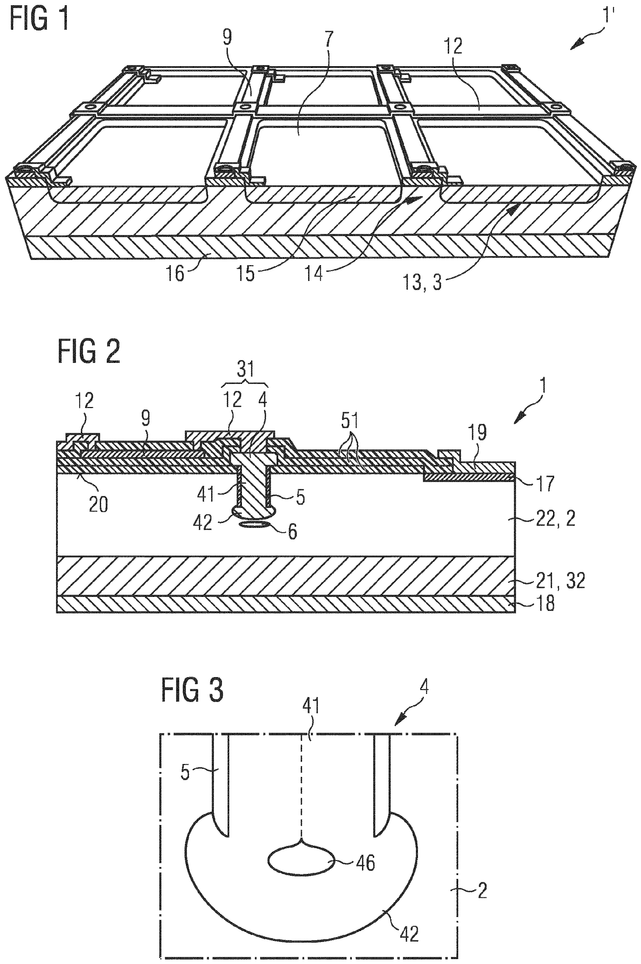

Figure 1 shows a modification 1' of a radiation detector known in the art. The modification 1' comprises a plurality of cells based on silicon, each having an antireflection coating 7 and a p-doped entrance window 15. Between adjacent cells, there are conductor tracks 12 on an n-doped semiconductor body 16 in periphery regions 14. In the periphery regions 14, there could be quench resistors 9. A sensitive area 3 corresponds to a high-field region 13 and is located beyond the p-doped entrance windows 15 in each case. Such a modification 1' is described, for example, in document DE 10 2009 017 505 A1.

Such modifications 1' are called "SiPM" which stands for silicon-based photo multiplier. Such detectors can be photon number resolved detectors which comprise an array of independently operated avalanche photodiodes, corresponding to the cells, also referred to as micro APDs. The cells are separated from each other by the periphery regions 14 for independence, said periphery regions 14 correspond to an insensitive, dead space. The electric field in the sensitive area 3 is formed as uniformly as possible by planar electrodes which are, in particular, formed by highly doped semiconductor layers for avalanche triggering.

In such SiPM detectors, the main trade-off is photon detection efficiency versus dynamic range. With a shrinking of the cells, which is mandatory for high dynamic range, the non-sensitive periphery regions 14 get more and more dominant. In a planar SiPM design, the periphery regions 14 cannot be minimized beyond a certain limit. This is because border effects become particularly critical for very small and deep micro APDs. The border effect is described, for example, in document F. Acerbi et al., Silicon Photomultipliers and Single-Photon Avalanche Diodes with Enhanced NIR Detection Efficiency at FBK, in Nuclear Instruments and Methods in Physics Research Section A: Accelerators, Spectrometers, Detectors and Associated Equipment, December 2017, DOI: 10.1016/j.nima.2017.11.098.

An aspect of the radiation detector described here is focused on overcoming the border effect for small and deep micro APDs. Additionally, the correlated noise can be reduced by the device construction described here due to a decreased gain.

An exemplary embodiment of a radiation detector 1 can be seen in Figure 2. The radiation detector 1 comprises a substrate 21 that is a highly p-doped silicon substrate. The substrate 21 can also constitute a second electrode 32. Optionally, on the second electrode 32 a backside contact 18 is applied.

A semiconductor layer 22 is grown on the substrate 21. The semiconductor layer 22 constitutes a radiation-sensitive semiconductor body 2. As a first electrode 31, there is a tip 4 that runs from a radiation entrance face 20 of the semiconductor body 2 towards the second electrode 32. The tip 4 comprises a pillar 41 which is of approximately cylindrical shape. At the end of the pillar 41, there is a head 42. The head 42 is of ellipsoidal shape.

Around the pillar 41, there can be an electrical insulation layer 5. Thus, an electrical contact between the tip 4 and the semiconductor body 2 is present only at the head 42. There can be further electrical insulating layers 51 on the radiation entrance face 20. By means of the insulation layers 51 and by means of conductor tracks 12, a quench resistor 9 and the tip 4 can be electrically addressed.

As an option, the periphery contact 19 made of a metal, for example, is located on a p-doped region 17. The semiconductor layer 22 is preferably p-doped, in particular with a comparably low dopant concentration. The tip 4 is preferably made of n-doped polysilicon. The insulation layers 5, 51 can be made of a silicon oxide, the conductor tracks 12 can be made of a metal or of a transparent conductive oxide.

The quench resistor 9 is preferably of polysilicon. In particular, the quench resistor 9 is configured as described in paragraphs 27, 28 and 74 of document DE 10 2009 017 505 A1, the disclosure content of these paragraphs is included by reference.

For simplicity, in Figure 2 only one first electrode 31 is shown. However, the radiation detector 1 preferably comprises a plurality of the tips 4, for example at least 100,000 of the tips 4.

As an option, there is a doped area 6 near the head 42 in the semiconductor layer 22. The doped area 6 is preferably p-doped, for example with boron. A dopant concentration in the doped area 6 is significantly higher than in the silicon semiconductor layer 22.

Figure 3 shows a schematic cross section of the head 42 and of the pillar 41. For example, a hole for the pillar 41 in the semiconductor 2 is produced by anisotropic dry etching. Then, a hole for the head 42 is produced in particular by isotropic wet etching. Thus, the head 42 can have small regions that extend towards the radiation entrance face 20, starting from the end of the pillar. However, in general the shape of the head 42 is ellipsoidal.

Further, during filling the recess for the tip 4 with a conductive material such as polysilicon or a metal, it is possible that such material grows with an approximately constant rate from all side walls. Hence, especially in the head 42 of the tip 4, a cavity 46 may result. However, this cavity 46 does not impair the functionality of the tip 4 as long as the side walls are coated sufficiently thick. Such cavities 46 could also be present in all other exemplary embodiments.

In Figure 43, an electrical field around the tip 4 is illustrated. Near the head 42, there is the high-field region 13 which is configured for an avalanche breakdown. The high-field region 13 forms a thin shell directly around the head 42 and limited to the head 42. A large sensitive area 3 is located all around the high-field region 13. Photons absorbed in the sensitive area 3 generate electron hole pairs, for example the electrons are directed towards the head 42 due to the electrical field. When the charge carriers reach the high-field region 13, an avalanche breakdown occurs and the resulting charge carriers are collected in the head 42. Thus, the pillar 41 is just for a voltage supply and for an electrical contact towards the head 42.

Hence, the sensitive area 3 of the micropixel or cell associated with the tip 4 is depleted from the point-like head 42 of the tip 4 of the electrode 31 which is, in particular, formed into the silicon 21, 22. The electrical field is diverging from the quasi point-shaped head 42, giving a low capacitance structure. The high-field region 13 is formed only in a very small area around the head 42. In comparison to the planar structure as depicted in Figure 1, all photocarriers generated in the depletion region are focused to the head 42.

Thus, with the design as exemplified in Figure 2, less, or nearly no, dead space and no, or no significant, border effects occur due to the focussing electric fields. Thus, a very high fill factor and a high photon detection efficiency can be achieved. Further, a higher time resolution can be achieved due to higher photon detection efficiency. Moreover, the higher photon detection efficiency allows an increased photon number resolution. Thus, the micropixels or cells can be further scaled down and/or miniaturized. With an increased number of cells, a higher dynamic range is feasible.

Further, a lower operating voltage is possible due to the point-like, shallow high field region near the tip 4. Thus, the depletion region can be extended up to several 10 um into the semiconductor layer 22 even at low overvoltages, in particular in a lateral direction parallel to the radiation entrance face 20. This allows in particular red-sensitive devices with a high photon detection efficiency at longer wavelengths. With this design, SiPMs in low voltage CMOS technology are feasible that can be operated with a voltage in the order of 10 V.

Moreover, with the design described here a lower capacitance can be reached due to the diverging electrical field. This improves the time response and the recovery time of the detector. This allows a higher dynamic range due to shorter recovery times. Moreover, correlated noise can be decreased due to lower gain, as after-pulsing and optical crosstalk can be reduced. The time resolution can be improved due to the faster response and due to lower noise, too. Moreover, the lower capacitance allows a higher photon number resolution due to lower noise and goes ahead with lower electronic noise. As no noise-suppressing elements may be necessary, a simplified overall configuration can be realized. Thus, production costs can be reduced.

In the exemplary embodiment of Figure 4 it is shown that there is a plurality of the tips 4. At each one of the heads 42 of the tips 4, there is a high-field region 13 that is surrounded in a nearly spherical shape by the sensitive area 3. The sensitive areas 3 can adjoin each other or may overlap, so that a high fill factor can be realized.

Other than shown in Figure 4, preferably there is an electrical insulation layer at the pillars 41 as illustrated in connection with Figure 2.

In this exemplary embodiment, the second electrode 32 has been illustrated as a continuous electrode that is assigned to all tips 4. Contrary to that, there could be a separate second electrode 32 for each one of the tips 4 or for groups of the tips 4. This can also be true in all other exemplary embodiments. However, a continuous second electrode 32 is preferred.

In Figure 5, one of the tips 4 is illustrated in more detail. In this case, the tip 4 has an approximately cylindrical pillar 41 and an approximately spherical head 42. Thus, the sensitive area 3 also has approximately a spherical shape with an insensitive sector around the pillar 41.

A thickness Ws of the sensitive semiconductor body 2 is preferably at least 1 um or at least 2 um. The thickness Ws can reach up to 1 millimeter or up to 700 um if the substrate 21 is included in the semiconductor body 2, in particular if the second electrode 32 is of a metal or of a transparent conductive oxide.

The thickness Ws exceeds the tip height Th. The tip height Th is preferably at least 1 um and/or at most 25 um. In particular, the tip height Th is between two times and twenty times, inclusive, a mean pillar width Tw. The mean pillar width Tw is preferably at least 0.5 um and/or at most 2 um. Preferably, the thickness Ws of the sensitive semiconductor body 2 is at least three times and/or at most 500 times the pillar width Tw. A maximum width Td of the tip 4 is at least 0.5 um and/or at most 5 um. In particular, the maximum width Td is between 0.1 times and/or at most 5 times the pillar width Tw, also compare the exemplary embodiments of Figures 14 to 17. In case the tip has a shape as shown in figure 8, the pillar width Tw is preferably at most 0.5 um. In the embodiment of Figure 5, the maximum width of the tip 4 Td corresponds to a diameter of the head 42. The pillar width Tw is constant along the pillar 41. These numerical values preferably also apply to all other exemplary embodiments.

The detector 1 of Figure 5 is particularly suitable to detect infrared radiation. Radiation R can radiate into the semiconductor body 2 from the side with the first electrode 31. As an alternative or in addition, the radiation R can enter the semiconductor body 2 from the side of the second electrode 32, in particular if the second electrode 32 is of a transparent conductive oxide or of a very thin metallic layer or is formed as a grid.

In particular if the detector 1 is sensitive to infrared radiation, the sensitive semiconductor body 2 is comparably thick. That is because the preferred material for the semiconductor body 2 is silicon and silicon has a strong dependency of the absorption depth A on the wavelength λ, compare Figure 6. In particular, the thickness Ws of the sensitive semiconductor body 2 amounts to at least 5% of the absorption depth A or to at least the absorption depth A or to at least twice the absorption depth A for the wavelength of the radiation R to be detected by the radiation detector 1. The effective thickness of the semiconductor body 2 may be increase if the second electrode 32 is reflective for the radiation to be detected.

In the exemplary embodiment of Figure 7, the head 42 is of semispherical shape. In this case, the sensitive area 3 is also of semispherical shape. Thus, a tip diameter corresponds to the diameter of the head 42. The configuration of Figure 7 is particularly suitable to detect visible light wherein the radiation R to be detected can enter the semiconductor body 2 from the side of the first electrode 31 and/or from the side of the second electrode 32.

In the embodiment of Figure 8, a width of the tip 4 continuously decreases towards the head 42. Because of this design, the sensitive area 3 has approximately the shape of a spherical sector. This configuration is particularly suitable to detect blue light or UV radiation wherein the radiation R enters the semiconductor body 2 preferably from the backside with the second electrode 32. For radiation with longer wavelengths than blue light, this detector geometry might be comparably insensitive.

Thus, the tip shape and, hence, the distribution of the electric field, can be optimized to the spectral sensitivity and to suppress noise due to dark current.

In Figures 9 to 17, some exemplary shapes for the pillars 31 and the heads 42 are illustrated. It is possible that there is an intersection 43 that forms a virtual or real boundary between the pillars 41 and the head 42. For example, at the intersection 43 the electrical insulation layer ends, not shown in these figures. Otherwise, at the intersection 43 there can be a change in the geometry of the tip 4, for example a kink when seen in cross-section.

According to Figure 9, both the pillar 41 and the head 42 are of cubic shape. This is also illustrated in Figure 11 where the pillar 41 only is illustrated. Otherwise, the pillar 41 can be of cylindrical shape, see Figure 10.

In Figures 12 to 17, various exemplary shapes of the head 42 are illustrated which can be used to shape the sensitive area 3.

According to Figure 12, the head 42 is of spherical shape. In Figure 13, the head 42 is illustrated to have an ellipsoidal shape. In Figure 14, the head 42 is of a pyramidal shape, for example with four edges, wherein other numbers of edges can also be present. Figure 15 refers to a corresponding truncated pyramid, whereas also a number of edges other than four can be present. Figures 16 and 17 show heads 42 that have the shape of a cone or of a truncated cone.

Thus, with the head 42 and also with the pillar 41 the divergent electrical field and a suitable high-field region 13 can be defined to adapt the detector 1 to the respective requirements. In particular, any curved surface might be suitable to solve a pre-defined requirement. Hence, the configurations of Figures 9 to 11 should be understood to be examples only.

In Figures 18 to 23, various designs around the tips 4 are illustrated. The design of Figure 18 essentially corresponds to the design explained in connection with Figure 2.

Contrary to that, not forming part of the claimed invention, according to Figure 19 no insulation layer is present.

In the exemplary embodiment of Figure 20, there is the doped area 6 beyond the head 42. The doped area 6 is close to the head 42. A diameter of the doped area 6 is less than the diameter of the head 42, but more than the diameter of the pillar 41.

In the embodiment of Figure 21, the doped area 6 is smaller in size so that a diameter of the pillar 41 exceeds a diameter of the doped area 6.

The doped area 6 is in particular formed by ion implantation. Thus, the sharp edges of the doped area 6 as indicated in the figures are to be understood as being only schematic as the doped area 6 does not need to have sharp boundaries because of ion implantation.

In Figure 22 it is illustrated that the tip 4 can be of a core-shell construction. That is, there could be a core 44 that is of a metal, for example, whereas a shell 45 is of a semiconductor material like polysilicon, for example. Otherwise, the core 44 could be a cavity 46, too; that is, instead of the core 44 there could be a hollow space. Contrary to what is shown in Figure 3, the cavity 46 may extend into the pillar 41 or might completely run through the pillar 41 up to the radiation entrance face 20.

In Figure 23 it is illustrated that the pillar 41 can be of a first material and the head 42 can be of a second material. For example, the first material is a metal and the second material is a semiconductor material. When using two different semiconductor materials for the pillar 41 and for the head 42, the quench resistor 9 might be realized by the pillar 41 itself.

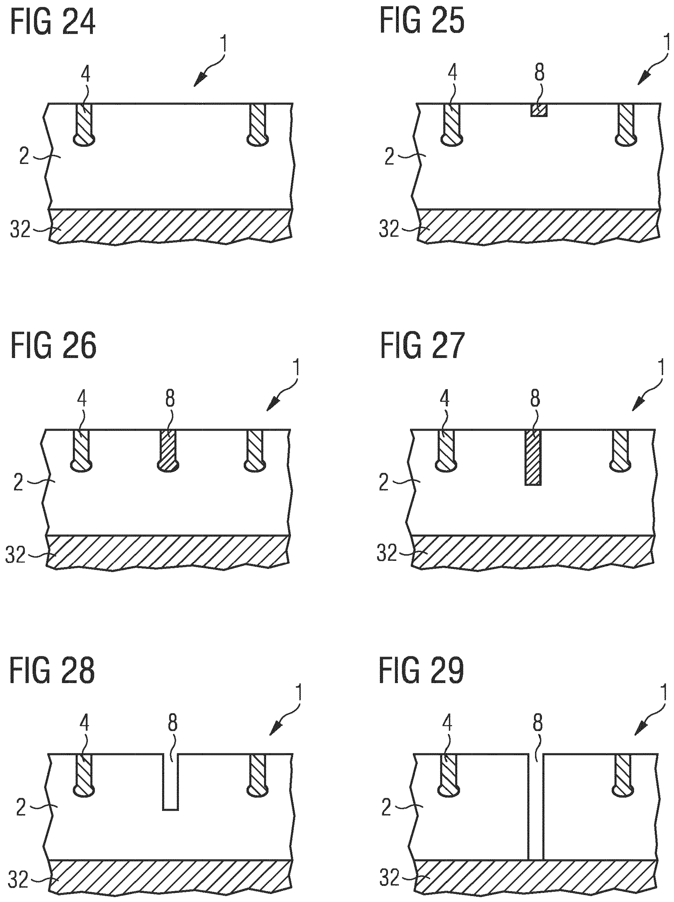

According to the embodiment of Figure 24, the semiconductor body 2 extends over the entire detector 1 without thickness variations, not taking into account the tips 4. Thus, there is no trench that separates the cells of the detector 1 with the tips 4. Not shown, there can be electrical through contacts that preferably do not have any optical function.

Contrary to that, according to Figure 25 there is a shallow trench 8 between adjacent tips 4. The trench 8 can be filled with air or can be evacuated or can also be filled with a different material, for example with an absorbing or reflective material like a metal.

According to Figure 26, when seen in cross-section the trench 8 has the same shape as the tips 4. Again, the trench 8 might be filled with an absorptive or reflective material.

According to Figure 27, the trench 8 is comparably deep, that is deeper than the tips 4, so that a distance between the second electrode 32 and an end of the trench 8 might be smaller than a distance between the second electrode 32 and the tips 4.

In Figure 28 it is illustrated that the trench 8 might be evacuated or filled with a gas.

According to Figure 29, the trench 8 can reach until the second electrode 32 so that the semiconductor body 2 is completely removed in the area of the trench 8.

In the top views of Figures 30 and 31, different configurations of the trenches 8 are illustrated. In Figures 30 and 31, all configurations of Figures 25 to 29 can be realized.

According to Figure 30, each one of the cells comprises one of the tips 4 and is completely or almost completely surrounded by the trench 8. According to Figure 31, small groups of cells and, thus, of tips 4 are completely surrounded or almost completely by a common trench 8.

As can be seen from Figures 30 and 31, the cells and, thus, the tips 4 are preferably arranged in a hexagonal grid. Contrary to that, other arrangements of the tips 4 when seen in top view can be used, for example rectangular or quadratic grids.

The trenches 8 are configured, for example, as described in document DE 10 2009 017 505 A1, see paragraphs 30, 31, 32 and 90, the disclosure content of these paragraphs is included by reference.

In Figure 32 it is illustrated that the tips 4 can be distributed inhomogeneously when seen in top view onto the radiation entrance face 20. There can be a continuous gradient. That is, in Figure 32, a density of the tips 4 increases monotonically or strictly monotonically from left to right.

Otherwise, see Figure 33, there can be a plurality of regions with an increased density of the tips 4. Between these areas with an increased density, there can be a continuous region with a lower density of the tips 4. The distribution of high density and low density regions of the tips 4 can also be inverted.

By adjusting the density of the tips 4, the electric field and thus the sensitive area can be adjusted in more detail.

In Figure 34 it is illustrated that there can be an antireflection coating 7 on the side of the first electrode 31. Contrary to that, according to Figure 35 the antireflection coating 7 is located on the side of the second electrode 32. If radiation enters the detector 1 from two sides, there could be two antireflection coatings 7.

According to Figure 36, the quench resistor 9 is arranged laterally alongside the tip 4. Otherwise, the quench resistor 9 can be integrated in the tip 4, the Figure 37.

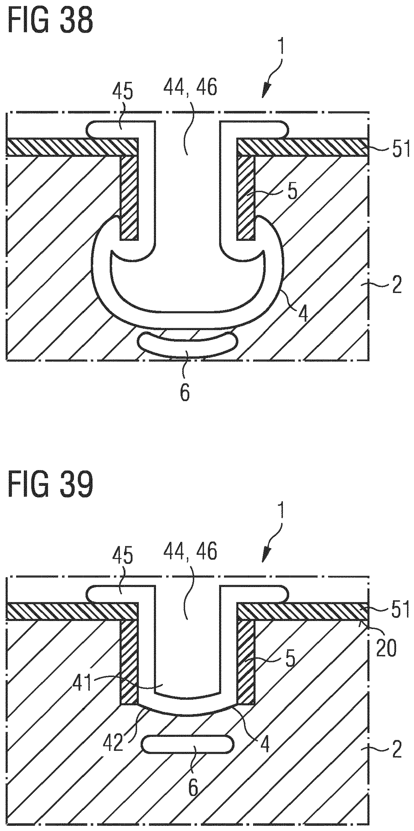

In the exemplary embodiment of Figure 38 it is illustrated that there is a shell 45 which is preferably of polysilicon. The core 44 can also be of a semiconductor material like silicon or can be of a metal.

Thus, preferably the hole for the pillar 41 is formed with anisotropic etching with an additional isotropic etching step to form the pseudo ball profile for the head 42. If required, an additional ion implementation step could be carried out to form the doped area 6. Then, the material for the shell 45 is deposited, preferably followed by an annealing step.

In Figure 39 it is illustrated that the pillar 41 together with the head 42 is of nearly cubic or cylindrical shape. Due to the etching of the recess for the tip 4, there might be rounded edges at a bottom of the recess. The electrical insulation layer 5 can nearly range until the end of the tip 4 and the head 42 might be limited to the bottom face of the tip 4, said bottom face may run in parallel or approximately in parallel with the radiation entrance face 20.

In Figures 38 and 39 it is possible that there is no core 44, but that there is a hollow space to form the cavity 46 instead of the core 44. Such cavities 46 could also be present in all other exemplary embodiments. Such cavities 46 may result from the growth conditions during the filling of the recess for the tip 4 with the material for the shell 45.

In Figures 40 and 41 it is shown that the second electrode 32 can have a protrusion that is located opposite the tip 4. According to Figure 40, said protrusion is only small and has an approximately semicircular shape when seen in cross-section. According to Figure 41, the second electrode 32 has a more pronounced protrusion that can have the basic shape of the tip 4 when seen in cross-section.

That is, the second electrode 32 may have a structure with tips, too. This can also be true in all other exemplary embodiments.

The different aspects for the tips 4 like the geometrical shape as illustrated in the individual embodiments can be combined in each case with the other aspects as the density of the tips 4, the occurrence of the trenches 8, the core-shell setup or the existence of a quench resistor 9, for example. Moreover, the insulation layer 5 can be present in all exemplary embodiments, even if not explicitly shown.

Figure 42 illustrates a vehicle 100 that comprises the detector 1 and also comprises a radiation source 10. The radiation source 10 emits a radiation R, preferably near infrared laser radiation. This radiation R is reflected in part at an external object 11 back towards the radiation detector 1. Thus, by means of a time-of-flight measurement and because of the high temporal resolution of the radiation detector 1 and the light source 10, a distance to the object 11 can be measured.

Other than shown, the light source 10 and the detector 1 can be arranged, not only close to one another, but also at a distance to one another. Thus, the detector 1 and the light source 10 need not be accommodated in a single recess 101 in the vehicle 100.

As an option, there is a cover 102 that covers the radiation source 10 and/or the detector 1. The cover 102 might have a filter function for the radiation so that only radiation of specific wavelength ranges can reach the detector 1.

The components shown in the figures can follow, unless indicated otherwise, preferably in the specified sequence directly one on top of the other. Layers which are not in contact with each other in the figures are preferably spaced apart from one another. If lines are drawn parallel to one another, the corresponding surfaces are preferably oriented parallel to one another. Likewise, unless indicated otherwise, the positions of the drawn components relative to one another are correctly reproduced in the figures.

The invention described here is not restricted by the description on the basis of the exemplary embodiments. Rather, the invention encompasses any combination of features, which includes in particular any combination of features in the patent claims, even if this feature or this combination itself is not explicitly specified in the patent claims or exemplary embodiments.

### List of Reference Signs

- 1: radiation detector
- 1': modification of a radiation detector
- 2: semiconductor body
- 20: radiation entrance face of the semiconductor body
- 21: substrate
- 22: semiconductor layer
- 23: hole
- 3: sensitive area
- 31: first electrode
- 32: second electrode
- 4: tip of the first electrode
- 41: pillar of the tip
- 42: head of the tip
- 43: intersection
- 44: core
- 45: shell
- 46: cavity
- 5: electrical insulation layer
- 51: further electrical insulation layer
- 6: doped area
- 7: antireflection coating
- 8: trench
- 9: quench resistor
- 10: light source
- 11: external object
- 12: conductor track
- 13: high-field region
- 14: periphery region
- 15: p-doped entrance window
- 16: n-doped semiconductor body
- 17: p-doped region
- 18: backside contact
- 19: periphery contact
- 100: vehicle
- 101: recess
- 102: cover
- A: absorption depth of the radiation, depending on the wavelength λ
- R: radiation
- Td: maximum width of the tip
- Th: penetration depth of the tip
- Tw: pillar width
- Wd: width of the depletion region around the tip
- Ws: thickness of the sensitive semiconductor body

## Claims

1. A radiation detector (1) comprising:
- a semiconductor body (2) having at least one radiation entrance face (20),
- a plurality of first electrodes (31), and
- at least one second electrode (32),
wherein
- each one of the first electrodes (31) comprises a tip (4, 41) comprising a pillar (41) and a head (42) that extends into the semiconductor body (2),
- a penetration depth (Th) of the tips (4) into the semiconductor body (2) exceeds a maximum width (Td) of the tips (4), and
- the tips (4) are configured to collect charge carriers generated in the semiconductor body (2) by the radiation to be detected,
- the pillar (41) starts at the radiation entrance face (20) of the semiconductor body (2) and the head (42) terminates the pillar (41) within the semiconductor body (2),
- an electrical insulation layer (5) is located directly between the pillar (41) and the semiconductor body (2) and
- an end of the electrical insulation layer (5) defines an intersection between the pillar (41) and the head (42) so that the head (42) is in direct electrical contact with the semiconductor body (2) and not the pillar (41).

2. The radiation detector (1) according to the preceding claim,
wherein the pillar (41) extends along at least 40% of the tip (4), and
wherein the penetration depth (Th) of said tip (4) into the semiconductor body (2) exceeds a maximum width of the insulation layer (5).

3. The radiation detector (1) according to one of the preceding claims,
wherein at least one of the tips (4) comprises a pillar (41) that is narrower than the associated head (42) so that the maximum width (Td) is present at the head (42),
wherein said pillar (41) is of cylindrical or prismatic shape, and
wherein said head (42) is of circular or elliptic shape when seen in a cross section along the respective tip (4).

4. The radiation detector (1) according to the previous claim,
wherein at least one of the tips (4) terminates in the semiconductor body (2) with a curvature,
wherein a radius of the curvature is at least 5 % and at most 60% of the penetration depth (Th).

5. The radiation detector (1) according to one of the preceding claims,
wherein at least one of the tips (4) becomes monotonically narrower along the direction into the semiconductor body (2),
wherein said tip (4) terminates in the semiconductor body (2) with an edge and/or a corner.

6. The radiation detector (1) according to one of the preceding claims, further comprising at least one doped area (6),
wherein the doped area (6) is associated to one of the tips (4) and is located between said tip (4) and the second electrode (32),
wherein a distance between the doped area (6) and the tip (4) is smaller than that between the doped area (6) and the second electrode (32), and
wherein a peak doping concentration in the doped area (6) exceeds a peak doping concentration of adjacent regions of the semiconductor body (2) by at least 1 orders of magnitude.

7. The radiation detector (1) according to one of the preceding claims,
wherein the semiconductor body (2) is based on silicon,
wherein the radiation detector (1) is configured to detect radiation from at least a part of the wavelength range from 800 nm to 980 nm inclusive,
wherein a maximum thickness of the semiconductor body (2) between the first electrode (31) and the second electrode (32) is between 1 µm and 25 µm inclusive.

8. The radiation detector (1) according to one of the preceding claims,
wherein the tips (4) are in part or completely of a semiconductor material that is different from the semiconductor body (2).

9. The radiation detector (1) according to one of the preceding claims,
wherein the semiconductor body (2) continuously extends over the first electrodes (31) so that a thickness of the semiconductor body (2) between adjacent tips (4) is constant.

10. The radiation detector (1) according to one of claims 1 to 8,
wherein each one of the first electrodes (31) or small groups of first electrodes (31) are surrounded by trenches (8), the semiconductor body (8) has a reduced thickness or is completely removed in an area of the trenches (8).

11. The radiation detector (1) according to one of the preceding claims, further comprising quench resistors (9), each one of the quench resistors (9) is assigned to one of the first electrodes (31),
wherein the respective quench resistor (9) is integrated in the tip (4) of the assigned first electrode (31).

12. The radiation detector (1) according to one of the preceding claims, comprising at least one of the following features:
wherein a density of the tips (4) varies over the semiconductor body (2) when seen in top view onto the radiation entrance face (20);
wherein one or some or all of the tips (4) comprises a pillar (41) and a head (42), and the pillar (41) of one or some or all of the tips (4) is narrower than the associated head (42).

13. A method for producing the radiation detector (1) according to one of the preceding claims comprising the steps of:
- providing a substrate (21),
- growing at least one semiconductor layer (22) onto the substrate (21) to form the semiconductor body (2) having at least one radiation entrance face (20),
- providing a plurality of first electrodes (31),
- providing at least one second electrode (32),
- forming holes (23) at least into the semiconductor layer (22),
- filling the holes (23) with at least one material to form the tips (4) each one of the first electrodes (31) and
- electrically connecting the tips (4).

14. A method to operate the radiation detector (1) according to one of claims 1 to 12,
wherein a voltage is applied between the first electrode (31) and the second electrode (32) so that an electrical field increases towards the heads (42) of the tips (4),
wherein the radiation detector (1) is operated in a proportional avalanche mode, below breakdown, or in Geiger mode above breakdown.

15. The method according to the preceding claim,
wherein the radiation detector (1) is operated in the avalanche mode so that an electrical high-field region in which an avalanche breakdown occurs is limited to a shell around an end of the tip (4) within the semiconductor body (2),
wherein a light source (10) for near-infrared radiation is assigned to the radiation detector (1), the radiation detector (1) detects near-infrared radiation emitted by the light source (10) and reflected by an external object (11) to determine a distance to the object (11) by means of a time-of-flight measurement.

## Patentansprüche

1. Ein Strahlungsdetektor (1) aufweisend:
- einen Halbleiterkörper (2), welcher mindestens eine Strahlungseintrittsfläche (20) hat,
- eine Mehrzahl von ersten Elektroden (31), und
- mindestens eine zweite Elektrode (32),
wobei
- jede der ersten Elektroden (31) eine Spitze (4, 41) aufweist, aufweisend eine Säule (41) und einen Kopf (42), welche sich in den Halbleiterkörper (2) erstreckt,
- eine Eindringtiefe (Th) der Spitzen (4) in den Halbleiterkörper (2) eine maximale Breite (Td) der Spitzen (4) überschreitet, und
- die Spitzen (4) konfiguriert sind, Ladungsträger zu sammeln, welche in dem Halbleiterkörper (2) mittels der zu detektierenden Strahlung erzeugt werden,
- die Säule (41) an der Strahlungseintrittsfläche (20) des Halbleiterkörpers (2) beginnt, und der Kopf (42) die Säule (41) in dem Halbleiterkörper (2) beendet,
- eine elektrisch isolierende Schicht (5) direkt zwischen der Säule (41) und dem Halbleiterkörper (2) angeordnet ist, und
- ein Ende der elektrisch isolierenden Schicht (5) einen Schnittpunkt zwischen der Säule (41) und dem Kopf (42) definiert, so dass der Kopf (42) in direktem elektrischem Kontakt mit dem Halbleiterkörper (2) ist und nicht die Säule (41).

2. Der Strahlungsdetektor (1) gemäß dem vorangehenden Anspruch,
wobei die Säule (41) sich entlang von mindestens 40 % der Spitze (4) erstreckt, und
wobei die Eindringtiefe (Th) der Spitze (4) in den Halbleiterkörper (2) eine maximale Breite der Isolationsschicht (5) überschreitet.

3. Der Strahlungsdetektor (1) gemäß einem der vorangehenden Ansprüche,
wobei mindestens eine der Spitzen (4) eine Säule (41) aufweist, welche schmaler als der zugehörige Kopf (42) ist, so dass die maximale Breite (Td) an dem Kopf (42) vorliegt,
wobei die Säule (41) von einer zylindrischen oder prismatischen Form ist, und
wobei der Kopf (42) von einer runden oder elliptischen Form ist, wenn er in einem Querschnitt entlang der jeweiligen Spitze (4) betrachtet wird.

4. Der Strahlungsdetektor (1) gemäß dem vorangehenden Anspruch,
wobei mindestens eine der Spitzen (4) in dem Halbleiterkörper (2) mit einer Krümmung endet,
wobei ein Radius der Krümmung mindestens 5 % und höchstens 60 % der Eindringtiefe (Th) ist.

5. Der Strahlungsdetektor (1) gemäß einem der vorangehenden Ansprüche,
wobei mindestens eine der Spitzen (4) entlang der Richtung in den Halbleiterkörper (2) monoton schmaler wird,
wobei die Spitze (4) in dem Halbleiterkörper (2) mit einer Kante und/oder einer Ecke endet.

6. Der Strahlungsdetektor (1) gemäß einem der vorangehenden Ansprüche, ferner aufweisend mindestens einen dotierten Bereich (6),
wobei der dotierte Bereich (6) einer der Spitzen (4) zugeordnet ist und zwischen der Spitze (4) und der zweiten Elektrode (32) angeordnet ist,
wobei ein Abstand zwischen dem dotierten Bereich (6) und der Spitze (4) kleiner ist als der zwischen dem dotierten Bereich (6) und der zweiten Elektrode (32), und
wobei eine Spitzendotierkonzentration in dem dotierten Bereich (6) eine Spitzendotierkonzentration von benachbarten Bereichen des Halbleiterkörpers (2) um mindestens eine Zehnerpotenz überschreitet.

7. Der Strahlungsdetektor (1) gemäß einem der vorangehenden Ansprüche,
wobei der Halbleiterkörper (2) auf Silizium basiert,
wobei der Strahlungsdetektor (1) konfiguriert ist, Strahlung von zumindest einem Teil des Wellenlängenbereichs von 800 nm bis einschließlich 980 nm zu detektieren,
wobei eine maximale Dicke des Halbleiterkörpers (2) zwischen der ersten Elektrode (31) und der zweiten Elektrode (32) zwischen 1 µm und einschließlich 25 µm ist.

8. Der Strahlungsdetektor (1) gemäß einem der vorangehenden Ansprüche,
wobei die Spitzen (4) teilweise oder vollständig aus einem Halbleitermaterial sind, welches verschieden von dem Halbleiterkörper (2) ist.

9. Der Strahlungsdetektor (1) gemäß einem der vorangehenden Ansprüche,
wobei der Halbleiterkörper (2) sich kontinuierlich über die ersten Elektroden (31) erstreckt, so dass eine Dicke des Halbleiterkörpers (2) zwischen benachbarten Spitzen (4) konstant ist.

10. Der Strahlungsdetektor (1) gemäß einem der Ansprüche 1 bis 8,
wobei jede der ersten Elektroden (31) oder kleine Gruppen von ersten Elektroden (31) von Gräben (8) umgeben sind, wobei der Halbleiterkörper (8) in einem Bereich der Gräben (8) eine reduzierte Dicke hat oder vollständig entfernt ist.

11. Der Strahlungsdetektor (1) gemäß einem der vorangehenden Ansprüche, ferner aufweisend Löschwiderstände (9), wobei jeder der Löschwiderstände (9) einer der ersten Elektroden (31) zugeordnet ist,
wobei der jeweilige Löschwiderstand (9) in die Spitze (4) der zugeordneten ersten Elektrode (31) integriert ist.

12. Der Strahlungsdetektor (1) gemäß einem der vorangehenden Ansprüche, aufweisend mindestens eines der folgenden Merkmale:
wobei eine Dichte der Spitzen (4) in Draufsicht auf die Strahlungseintrittsfläche (20) über den Halbleiterkörper (2) variiert;
wobei eine oder einige oder alle der Spitzen (4) eine Säule (41) und einen Kopf (42) aufweist, und die Säule (41) von einer oder einigen oder allen der Spitzen (4) schmaler ist als der zugehörige Kopf (42).

13. Ein Verfahren zum Herstellen des Strahlungsdetektors (1) gemäß einem der vorangehenden Ansprüche, aufweisend die Schritte:
- Bereitstellen eines Substrats (21),
- Wachsen mindestens einer Halbleiterschicht (22) auf dem Substrat (21), um den Halbleiterkörper (2) zu bilden, welcher mindestens eine Strahlungseintrittsfläche (20) hat,
- Bereitstellen einer Mehrzahl von ersten Elektroden (31),
- Bereitstellen mindestens einer zweiten Elektrode (32),
- Bilden von Öffnungen (23) mindestens in der Halbleiterschicht (22),
- Füllen der Öffnungen (23) mit mindestens einem Material, um die Spitzen (4) jeder der ersten Elektroden (31) zu bilden, und
- elektrisches Verbinden der Spitzen (4).

14. Ein Verfahren zum Betreiben des Strahlungsdetektors (1) gemäß einem der Ansprüche 1 bis 12,
wobei eine Spannung zwischen der ersten Elektrode (31) und der zweiten Elektrode (32) angelegt wird, so dass ein elektrisches Feld in Richtung zu den Köpfen (42) der Spitzen (4) zunimmt,
wobei der Strahlungsdetektor (1) in einem proportionalen Avalanche-Modus unter einem Durchschlag, oder in einem Geiger-Modus über einem Durchschlag betrieben wird.

15. Das Verfahren gemäß dem vorangehenden Anspruch,
wobei der Strahlungsdetektor (1) in dem Avalanche-Modus betrieben wird, so dass ein Bereich mit einem hohen elektrischen Feld, in welchem ein Avalanche-Durchschlag auftritt, auf einen Mantel um ein Ende der Spitze (4) in dem Halbleiterkörper (2) begrenzt ist,
wobei eine Lichtquelle (10) für eine Nah-Infrarotstrahlung zu dem Strahlungsdetektor (1) zugeordnet ist, wobei der Strahlungsdetektor (1) die Nah-Infrarotstrahlung detektiert, welche von der Lichtquelle (10) emittiert wird und von einem externen Objekt (11) reflektiert wird, um einen Abstand zu dem Objekt (11) mittels einer Flugzeitmessung zu bestimmen.

## Revendications

1. Détecteur de rayonnement (1), comprenant :
- un corps semi-conducteur (2) présentant au moins une face d'entrée de rayonnement (20),
- une pluralité de premières électrodes (31), et
- au moins une seconde électrode (32),
dans lequel :
- chacune des premières électrodes (31) comprend une pointe (4, 41) comprenant un montant (41) et une tête (42) qui s'étend dans le corps semi-conducteur (2),
- une profondeur de pénétration (Th) des pointes (4) dans le corps semi-conducteur (2) dépasse une largeur maximale (Td) des pointes (4), et
- les pointes (4) sont configurées pour collecter des porteurs de charge générés dans le corps semi-conducteur (2) par le rayonnement à détecter,
- le montant (41) commence au niveau de la face d'entrée de rayonnement (20) du corps semi-conducteur (2) et la tête (42) termine le montant (41) à l'intérieur du corps semi-conducteur (2),
- une couche d'isolation électrique (5) est située directement entre le montant (41) et le corps semi-conducteur (2) et
- une extrémité de la couche d'isolation électrique (5) définit une intersection entre le montant (41) et la tête (42) de sorte que la tête (42) est en contact électrique direct avec le corps semi-conducteur (2) et pas le montant (41).

2. Détecteur de rayonnement (1) selon la revendication précédente,
dans lequel le montant (41) s'étend le long d'au moins 40 % de la pointe (4), et
dans lequel la profondeur de pénétration (Th) de ladite pointe (4) dans le corps semi-conducteur (2) dépasse une largeur maximale de la couche d'isolation (5).

3. Détecteur de rayonnement (1) selon l'une quelconque des revendications précédentes, dans lequel au moins l'une des pointes (4) comprend un montant (41) qui est plus étroit que la tête associée (42) de sorte que la largeur maximale (Td) est présente au niveau de la tête (42),
dans lequel ledit montant (41) est de forme cylindrique ou prismatique, et
dans lequel ladite tête (42) est de forme circulaire ou elliptique lorsqu'elle est vue dans une section transversale le long de la pointe respective (4).

4. Détecteur de rayonnement (1) selon la revendication précédente,
dans lequel au moins l'une des pointes (4) se termine dans le corps semi-conducteur (2) avec une courbure,
dans lequel un rayon de la courbure est d'au moins 5 % et d'au plus 60 % de la profondeur de pénétration (Th) .

5. Détecteur de rayonnement (1) selon l'une quelconque des revendications précédentes, dans lequel au moins l'une des pointes (4) devient plus étroite de manière monotone le long de la direction dans le corps semi-conducteur (2),
dans lequel ladite pointe (4) se termine dans le corps semi-conducteur (2) avec un bord et/ou un coin.

6. Détecteur de rayonnement (1) selon l'une quelconque des revendications précédentes, comprenant en outre au moins une zone dopée (6),
dans lequel la zone dopée (6) est associée à l'une des pointes (4) et est située entre ladite pointe (4) et la seconde électrode (32),
dans lequel une distance entre la zone dopée (6) et la pointe (4) est inférieure à celle entre la zone dopée (6) et la seconde électrode (32), et
dans lequel une concentration de dopage de crête dans la zone dopée (6) dépasse une concentration de dopage de crête de régions adjacentes du corps semi-conducteur (2) d'au moins 1 ordre de grandeur.

7. Détecteur de rayonnement (1) selon l'une quelconque des revendications précédentes,
dans lequel le corps semi-conducteur (2) est à base de silicium,
dans lequel le détecteur de rayonnement (1) est configuré pour détecter un rayonnement provenant d'au moins une partie de la plage de longueur d'onde allant de 800 nm à 980 nm inclus,
dans lequel une épaisseur maximale du corps semi-conducteur (2) entre la première électrode (31) et la seconde électrode (32) est comprise entre 1 um et 25 um inclus.

8. Détecteur de rayonnement (1) selon l'une quelconque des revendications précédentes, dans lequel les pointes (4) sont en partie ou en totalité en un matériau semi-conducteur qui est différent du corps semi-conducteur (2).

9. Détecteur de rayonnement (1) selon l'une quelconque des revendications précédentes, dans lequel le corps semi-conducteur (2) s'étend de manière continue sur les premières électrodes (31) de sorte qu'une épaisseur du corps semi-conducteur (2) entre des pointes adjacentes (4) est constante.

10. Détecteur de rayonnement (1) selon l'une quelconques des revendications 1 à 8,
dans lequel chacune des premières électrodes (31) ou de petits groupes de premières électrodes (31) est entourée de tranchées (8), le corps semi-conducteur (8) présente une épaisseur réduite ou est complètement éliminé dans une zone des tranchées (8).

11. Détecteur de rayonnement (1) selon l'une quelconque des revendications précédentes, comprenant en outre des résistances d'extinction (9), chacune des résistances de trempe (9) étant affectée à l'une des premières électrodes (31),
dans lequel la résistance de trempe respective (9) est intégrée dans la pointe (4) de la première électrode attribuée (31) .

12. Détecteur de rayonnement (1) selon l'une quelconque des revendications précédentes, comprenant au moins l'une des caractéristiques suivantes :
dans lequel une densité des pointes (4) varie sur le corps semi-conducteur (2) lorsqu'il est vu en vue de dessus sur la face d'entrée de rayonnement (20) ;
dans lequel une ou plusieurs ou toutes les pointes (4) comprennent un montant (41) et une tête (42), et le montant (41) d'une ou de plusieurs ou de toutes les pointes (4) est plus étroit que la tête associée (42).

13. Procédé de fabrication du détecteur de rayonnement (1) selon l'une quelconque des revendications précédentes, comprenant les étapes consistant à :
- fournir un substrat (21),
- faire croître au moins une couche semiconductrice (22) sur le substrat (21) pour former le corps semi-conducteur (2) présentant au moins une face d'entrée de rayonnement (20),
- fournir une pluralité de premières électrodes (31),
- fournir au moins une seconde électrode (32),
- former des trous (23) au moins dans la couche semiconductrice (22),
- remplir les trous (23) d'au moins un matériau pour former les pointes (4) de chacune des premières électrodes (31) et
- connecter électriquement les pointes (4).

14. Procédé pour faire fonctionner le détecteur de rayonnement (1) selon l'une quelconque des revendications 1 à 12,
dans lequel une tension est appliquée entre la première électrode (31) et la seconde électrode (32) de sorte qu'un champ électrique augmente vers les têtes (42) des pointes (4),
dans lequel le détecteur de rayonnement (1) fonctionne en mode d'avalanche proportionnelle, en dessous du claquage, ou en mode Geiger au-dessus du claquage.

15. Procédé selon la revendication précédente,
dans lequel le détecteur de rayonnement (1) fonctionne en mode d'avalanche de sorte qu'une région électrique à champ élevé dans laquelle un claquage en avalanche survient est limitée à une enveloppe autour d'une extrémité de la pointe (4) à l'intérieur du corps semi-conducteur (2),
dans lequel une source de lumière (10) pour un rayonnement infrarouge proche est attribuée au détecteur de rayonnement (1), le détecteur de rayonnement (1) détecte un rayonnement infrarouge proche émis par la source de lumière (10) et réfléchi par un objet externe (11) pour déterminer une distance par rapport à l'objet (11) au moyen d'une mesure de temps de vol.
